# FASCICULE DE BREVET EUROPEEN

(11) **EP 1 077 085 B1**
(45) Date de publication et mention de la délivrance du brevet: **16.11.2005**
(21) Numéro de dépôt: 00402216.6
(22) Date de dépôt: 03.08.2000
(51) Int. Cl.: B01J 37/20

(54) **Précarbonation de catalyseur d'hydrotraitement**
Vorkarburierung eines Hydrobehandlungskatalysators
Precarbonation of a hydrotreating catalyst

(30) Priorité: 17.08.1999 FR 9910577
(43) Date de publication de la demande: 21.02.2001
(73) Titulaire: EURECAT SA., 07800 La Voulte-sur-Rhône (FR)
(72) Inventeur: Dufresne, Pierre, 26000 Valence (FR); Labruyere, Franck, 07800 St Georges Les Bains (FR); Lacroix, Michael, 69009 Lyon (FR); Geantet, Christophe, 01700 Miribel (FR); Glasson, Cécile, 77210 Avon (FR)
(74) Mandataire: Benoist, François

(56) Documents cités:
- EP-A- 0 745 660

## Description

Les catalyseurs d'hydrotraitement comprenant en général un support oxyde amorphe ou cristallisé comme par exemple une alumine, une silice, une silice alumine, une zéolithe sur lequel est déposé au moins un élément des groupes VIII et VI de la classification périodique ou une combinaison de plusieurs éléments issus de ces mêmes groupes, comme par exemple les solides désignés CoMo/Al₂O₃, NiMo/Al₂O₃ ou NiW/Al₂O₃ doivent être préalablement sulfurés pour leurs conférer des performances catalytiques pour l'ensemble des réactions d'hydrotraitement comme par exemple l'hydrodésulfuration, l'hydrodéazotation, la démétallation et certaines hydrogénations. Cette étape de sulfuration préalable à l'acte catalytique peut être réalisée de deux manières différentes.

La première, dite sulfuration in situ, qui se caractérise par le fait que le catalyseur sous sa forme oxyde est, tout d'abord, chargé dans le réacteur de conversion d'hydrocarbure pour y être sulfuré. La seconde dite présulfuration hors site, comme décrite dans divers brevets de la demanderesse (USP4719195, USP 5397756, EP-A 785022) se démarque de la précédente par le fait que la sulfuration ou présulfuration du catalyseur est réalisée dans une unité particulière distincte du réacteur d'hydrotraitement.

La demande de brevet EP 0 745 660 A1 décrit une étape de cokage réalisée après la phase de présulfuration du catalyseur, lesquelles sont toutes deux menées in situ, c'est à dire à l'intérieur du réacteur de conversion des hydrocarbures. Ce procédé de post cokage de catalyseurs d'hydrotraitement des coupes essences issues du craquage catalytique contenant des composés soufrés et des composés oléfiniques, décrit un empoisonnement sélectif des sites actifs hydrogénants permettant, tout en maintenant les propriétés hydrodésulfurantes du catalyseur, de limiter l'hydrogénation des oléfines responsables de l'indice d'octane des dites essences.

L'objet de la présente invention est de procéder à la mise en oeuvre de la présulfuration du catalyseur en présence d'hydrogène et d'au moins un composé sulfuré qui peut être du sulfure d'hydrogène ou tout autre composé soufré susceptible de générer du sulfure d'hydrogène par hydrogénolyse, caractérisée en ce qu'en vue d'améliorer les performances catalytiques dans les réactions d'hydrotraitement, le catalyseur est précarboné de manière à déposer dans les pores du catalyseur du carbone solide en majeure partie non lixiviable. Le procédé selon l'invention s'applique tout particulièrement à une présulfuration effectuée hors site.

La présente invention caractérisée par la mise en oeuvre d'une précarbonation, permet d'améliorer les propriétés hydrodésulfurantes et hydrogénantes du catalyseur. D'autre part, il a été constaté que cette précarbonation permet de réduire la sélectivité initiale en produit de craquage et d'isomérisation. Une hypothèse explicative peut être que cette baisse de la sélectivité en craquage et isoménsation est due à ce que le dépôt de carbone atténue l'acidité du support. La désactivation du catalyseur peut être ainsi diminuée et sa durée de vie augmentée.

La précarbonation est réalisée préalablement à la phase de présulfuration.

Pour l'imprégnation qui est réalisée à température ambiante, le composé carboné liquide est introduit dans la porosité du catalyseur sans nécessairement viser le remplissage total du volume poreux du catalyseur. Il s'agit donc d'un remplissage partiel du volume d'imprégnation entre 10% et 100% et de préférence entre 20 et 90%. Les sources carbonées convenables peuvent être choisies parmi les hydrocarbures paraffiniques, naphténiques et ou aliphatiques mais également parmi les composés organiques oxygénés comme par exemple les alcools, les cétones, les aldéhydes les acides organiques, les acides gras et les huiles végétales. Ces composés se caractérisent par des points d'ébullition élevés comme par exemple entre 150°C et 500°C et de préférence supérieure à 200°C. La quantité de carbone déposée à l'issue de l'étape d'imprégnation est comprise entre 2% et 30% poids par rapport à la masse de catalyseur oxyde.

A la suite de l'étape d'imprégnation, une étape de traitement thermique est nécessaire, cette étape de traitement thermique étant réalisée sous azote ou un autre gaz inerte, à une température comprise entre 150°C et 650°C et de préférence entre 300°C et 500°C. L'objectif de ce post traitement thermique, ou pyrolyse, de préférence réalisé sous gaz inerte est double. Il a pour fonction d'une part le réajustement du taux de carbone entre 2% et 10% poids et de préférence entre 3% et 7% poids par rapport à la matrice oxyde, et d'autre part la transformation des hydrocarbures, oxygénés ou non, introduits pendant l'étape d'imprégnation, de façon à ce que le carbone résiduel, à une teneur comprise entre 2% poids et 10% poids et de préférence entre 3% poids et 7% poids par rapport à l'oxyde, soit un composé carboné résiduel en majeure partie non lixiviable au toluène à reflux. Le composé carboné résiduel est en majeure partie non lixiviable au toluène à reflux, c'est-à-dire que le taux de lixiviation est inférieur à 40 %, de manière préférée inférieur à 30 % et de manière encore plus préférée inférieur à 20 %.

La précarbonation peut aussi s'effectuer par réaction directe entre le solide et un composé hydrocarboné. On pourra utiliser un composé prompt à se polymériser comme par exemple des oléfines ou des dioléfines à une température comprise entre 20 et 400°C.

L'étape de sulfuration du catalyseur précarboné peut être réalisée à pression atmosphérique dans un réacteur chauffé entre 200°C et 600°C, de préférence entre 200°C et 500°C, en présence d'un mélange gazeux sulfo réducteur. Plus particulièrement, la méthode selon l'invention s'applique à des sulfurations hors site qui peuvent être effectuées à haute température, par exemple à des températures supérieures à 400°C. Le réacteur utilisé peut être un réacteur de type lit fixe ou alors un système utilisant la technologie lit mobile comme par exemple le lit rotatif, le lit fluidisé ou le lit croulant. Le mélange gazeux sulfo réducteur est constitué d'hydrogène et de sulfure d'hydrogène, de pression partielle en sulfure d'hydrogène compris entre 5000 et 71000 Pascal. Le sulfure d'hydrogène peut être soit généré dans l'enceinte réactionnelle par hydrogénolyse d'un composé soufré en présence d'hydrogène (sulfure d'hydrogène naissant) comme par exemple les thiols, les sulfures organiques, les disulfures organiques et les polysulfures organiques, soit introduit simultanément à l'hydrogène. Dans le cas ou la technologie lit mobile est utilisée, la présulfuration sera dite à co courant si le mélange sulfo réducteur est introduit au point d'injection du catalyseur et sera dite à contre courant si le mélange gazeux est introduit au point de sortie du catalyseur.

### EXEMPLE 1 (comparatif)

Un catalyseur d'hydrotraitement contenant 18.2 % poids d'oxyde de molybdène et 3.8 % poids d'oxyde de cobalt déposés sur un support alumine de grande surface spécifique (220 m²/g) est sulfuré à pression atmosphérique par un mélange sulfo réducteur de composition 15 % volume de sulfure d'hydrogène (H₂S) et 85% volume d'hydrogène (H₂). La sulfuration du catalyseur est obtenue en deux étapes, la première étant une phase de montée en température contrôlée (5°C/min), la seconde un palier de 4 heures à la température finale de sulfuration choisie. La température finale de sulfuration pourra être soit de 400°C soit de 500°C. Après sulfuration, le catalyseur est refroidi sous flux d'azote jusqu'à la température ambiante. A cette température, une partie du catalyseur sulfure est transféré sous atmosphère d'azote pour analyse de son taux de sulfuration. Le reste est transféré sous les mêmes conditions dans les réacteurs des deux unités de tests catalytique sur charge modèle (hydrodésulfuration du thiophène à pression atmosphérique d'hydrogène et hydrogénation de la tétraline sous pression d'hydrogène).

Pour ces deux modes de sulfuration hors site (avec variation de la température finale de traitement), les résultats des taux de sulfuration avant test sont indiqués dans le tableau ci dessous. Le taux de sulfuration est défini comme le rapport entre les ratios molaires S/(Co+Mo) expérimental et S/(Co+Mo) théorique. Dans le cas présent ce ratio théorique, correspondant à la transformation totale des oxydes de molybdène MoO₃ et de cobalt CoO en sulfures respectivement MoS₂ et Co₉S₈, est de : [S/(Co+Mo)]ₜₕₑₒ = 1.64.
Par la suite, ces catalyseurs seront dénommés " **catalyseurs références** ".

| | S/(Co+Mo) | Taux de sulfuration (%) |
|---|---|---|
| Sulfuration H₂S-H₂ (15/85) à 400°C | 1.70 | 104 % |
| Sulfuration H₂S-H₂ (15/85) à 500°C | 1.70 | 104 % |

Parallèlement, à ces sulfurations caractéristiques d'un procédé de sulfuration hors site, le même catalyseur oxyde est chargé dans le réacteur d'une unité de test d'hydrodésulfuration de gasoil fonctionnant sous pression d'hydrogène et en phase liquide. Préalablement à la mesure d'activité, le dit catalyseur est sulfuré (mode in situ) par un mélange sulfo réducteur constitué de 5% volume de sulfure d'hydrogène et de 95% d'hydrogène par augmentation progressive de la température (5°C/min), de l'ambiante (25°C) à 380°C. Après un palier de 11 heures à 380°C, le catalyseur est refroidi jusqu'à la température ambiante sous flux d'azote. Ce mode de sulfuration dit in situ " ne permet pas d'analyser, préalablement au test d'activité, le taux de sulfuration du catalyseur. Les activités de ces trois tests (hydrodésulfuration du thiophène, hydrogénation de la tétraline, hydrodésulfuration de gasoil) seront par la suite utilisées comme référence.

### EXEMPLE 2 : PRE-IMPREGNATION - COMPARATIF

Le même catalyseur que celui utilisé dans l'exemple 1 est préalablement imprégné à 90 % de son volume d'imprégnation par un gasoil de distillation atmosphérique de point de coupe initial et final 250°C - 350°C. Avant traitement de sulfuration, une partie de solide est prélevée pour analyser la quantité totale de carbone imprégnée. La quantité de carbone présente sur le solide préimprégné est de 28% poids, correspondant à un ratio molaire C/(Co+Mo) de 11,71. Après lixiviation, dans un soxhlet au toluène à reflux, le taux de carbone résiduel (non extractible), présent sur le solide précarboné, est de 0,2% poids correspondant à un ratio molaire C/(Co+Mo) de 0,48, ce qui représente un taux de lixivation de 99,3%. Après chargement dans le réacteur de sulfuration hors site, ce catalyseur est sulfuré comme décrit dans l'exemple 1 à 400°C et à 500°C. Après ces traitements de sulfuration une partie de l'échantillon est prélevé sous azote pour en analyser le taux de sulfuration et le carbone résiduel. Les résultats d'analyses exprimés sous forme de ratios molaires C/(Co+Mo) S/(Co+Mo) avant et après traitement de sulfuration sont présentés dans le tableau ci après.

| | Avant traitement de sulfuration | Après traitement de sulfuration | | |
|---|---|---|---|---|
| | C/(Co+Mo) | C/(Co+Mo) | S/(Co+Mo) | Taux de sulfuration (%) |
| Sulfuration H₂S-H₂ (15/85) à 400°C | 11.71 | 0.92 | 1.69 | 103 % |
| Sulfuration H₂S-H₂ (15/85) à 500°C | 11.71 | 0.66 | 1.71 | 104 % |

### EXEMPLE 3 : PRE-CARBONATION

Le même catalyseur utilisé dans l'exemple 1 est préalablement imprégné à 90 % de son volume d'imprégnation par une huile végétale (huile de colza). Après un traitement thermique sous azote à 400°C pendant 4 heures, traitement destiné à pyrolyser la molécule organique pour libérer les fragments les plus légers et ne laisser sur le catalyseur qu'un résidu carboné faiblement hydrogéné et en grande partie non lixiviable au toluène à chaud, le catalyseur est refroidi jusqu'à température ambiante tout en le maintenant sous azote. Avant traitement de sulfuration, une partie du solide est prélevée pour analyser la quantité de carbone restant sur le catalyseur oxyde à l'issue du traitement de pyrolyse. La quantité de carbone présente sur le solide précarboné est de 4.9% poids, correspondant à un ratio molaire C/(Co+Mo) de 2.31. Après lixiviation, dans un soxhlet au toluène à reflux, le taux de carbone résiduel (non extractible), présent sur le solide précarboné, est de 4.3% poids correspondant à un ratio molaire C/(Co+Mo) de 2.02, ce qui représente un taux de lixivation de 12,2%. Après sulfuration de ce catalyseur comme décrit dans l'exemple 1 à 400°C et à 500°C et refroidissement sous azote, une partie de l'échantillon est prélevé sous azote pour en analyser le taux de sulfuration et le carbone résiduel. Les résultats d'analyses exprimés sous forme de ratios molaires C/(Co+Mo) S/(Co+Mo) avant et après traitement de sulfuration sont présentés dans le tableau ci dessous. Par la suite, ces catalyseurs seront dénommés" catalyseurs précarbonés".

| | Avant traitement de sulfuration | Après traitement de sulfuration | | |
|---|---|---|---|---|
| | C/(Co+Mo) | C/(Co+Mo) | S/(Co+Mo) | Taux de sulfuration (%) |
| Sulfuration H2S-H2 (15/85) à 400°C | 2.31 | 1.72 | 1.63 | 99 % |
| Sulfuration H2S-H2 (15/85) à 500°C | 2.31 | 1.58 | 1.69 | 103 % |

La sulfuration dans l'unité de test d'hydrodésulfuration de gasoil est réalisée sur l'oxyde précarboné dans les mêmes conditions que celles décrites dans l'exemple 1.

### EXEMPLE 4 : AUTRE METHODE DE PRE-CARBONATION

Le même catalyseur utilisé dans l'exemple 1, est imprégné à 90 % de son volume d'imprégnation par une huile minérale (150 Neutral Solvent) de densité 0.875 g/cm³. Après traitement de pyrolyse sous flux d'azote à 350°C pendant 4 heure, une partie du solide est prélevé pour analyser le taux de carbone avant et après lixiviation au toluène à reflux. Les résultats du dosage carbone avant et après traitement de lixiviation, exprimée par rapport au catalyseur précarboné, sont respectivement de 5.0% et de 4.1% correspondant respectivement à des ratios molaires C/(Co+Mo) de 2.49 et de 1.94, ce qui représente un taux de lixivation de 18 %. Après sulfuration de ce catalyseur comme décrit dans l'exemple 1 à 400°C et à 500°C et refroidissement sous azote, une partie de l'échantillon est prélevé sous azote pour en analyser le taux de sulfuration et le carbone résiduel. Les résultats d'analyses exprimés sous forme de ratios molaires C/(Co+Mo) S/(Co+Mo) avant et après traitement de sulfuration sont présentés dans le tableau ci dessous.

| | Avant traitement de sulfuration | Après traitement de sulfuration | | |
|---|---|---|---|---|
| | C/(Co+Mo) | C/(Co+Mo) | S/(Co+Mo) | Taux de sulfuration (%) |
| Sulfuration H₂S-H₂ (15/85) à 400°C | 2.49 | 1.16 | 1.66 | 101 % |
| Sulfuration H₂S-H₂ (15/85) à 500°C | 2.49 | 1.08 | 1.69 | 103 % |

### EXEMPLE 5 : RESULTATS D'ACTIVITE ET CONCLUSION

### Activité en hydrodésulfuration du thiophène sous 0.1 MPa d'hydrogène en phase gaz.

Après chargement, sous azote, du réacteur de l'unité de test catalytique d'HDS du thiophène par un des catalyseurs sulfurés précédemment (exemples 1 et 3) et introduction du mélange réactif de composition 97.2% volume d'hydrogène et 2.8 % volume de thiophène, la température est augmentée progressivement (5°C/min) jusqu'à 300°C. Après 15 heures de stabilisation à la température de 300°C, des prélèvements sont effectués dans les effluents gazeux et analysés en chromatographie phase gaz pour en mesurer la quantité résiduelle de thiophène, donnant ainsi le taux de conversion. L'activité ou vitesse spécifique de chaque catalyseur est calculée à partir du taux de conversion du réactif, de son débit molaire et de la masse de catalyseur chargée dans le réacteur. L'activité relative est définie comme le rapport entre les vitesses spécifiques mesurées sur les catalyseurs précarbonés (exemple 3) et sur les catalyseurs références (exemple 1) sulfurés à une même température. Les résultats sont présentés dans le tableau suivant.

| catalyseur | Température de sulfuration (°C) | Vitesse spécifique (10⁻⁶.mole.g⁻¹.s⁻¹) | Activité relative (%) |
|---|---|---|---|
| Référence | 400°C | 1.6 | 100 % |
| Précarboné | 400°C | 2.5 | 156 % |
| Référence | 500°C | 1.6 | 100 % |
| Précarboné | 500°C | 2.7 | 169 % |

### Activité en hydrogénation de la tétraline sous 4.5 MPa d'hydrogène en phase gaz

Après chargement, sous azote, du réacteur de l'unité de test catalytique par un des catalyseurs sulfurés précédemment (exemples 1 et 3) et introduction du mélange réactif, sous une pression totale de 4.5 MPa, de composition 99.84% volume d'hydrogène, 0.13 % volume de tétraline et 0.03% volume de sulfure d'hydrogène, la température est augmentée progressivement (5°C/min) jusqu'à 300°C. Après 10 heures de stabilisation à la température de 300°C, des prélèvements sont effectués dans les effluents gazeux et analysés en chromatographie phase gaz pour en mesurer la quantité résiduelle de tétraline, donnant ainsi le taux de conversion. L'activité ou vitesse spécifique de chaque catalyseur est calculée à partir du taux de conversion du réactif, de son débit molaire et de la masse de catalyseur chargée dans le réacteur. L'activité relative est définie comme le rapport entre les vitesses spécifiques mesurées sur les catalyseurs précarbonés (exemple 3) et sur les catalyseurs références (exemple 1) sulfurés à une même température. Les résultats sont présentés dans le tableau suivant.

| Catalyseur | Température de sulfuration (°C) | Vitesse spécifique (10⁻⁷.mole.g⁻¹.s⁻¹) | Activité relative (%) |
|---|---|---|---|
| Référence | 400°C | 1.8 | 100 % |
| Précarboné | 400°C | 2,0 | 111 % |
| Référence | 500°C | 1.7 | 100 % |
| Précarboné | 500°C | 2.4 | 141 % |

### Sélectivité en produits de craquage et d'isomérisation en hydrogénation de la tétraline sous 4.5 MPa d'hydrogène en phase gaz.

Après 10 heures de stabilisation à la température de 300°C du test précédent, la température de l'unité de test catalytique est ajustée de façon à obtenir une conversion en tétraline de l'ordre de 7%. Les analyses effectuées en chromatographie phase gaz dans les effluents gazeux permettent de quantifier les produits de craquage (alkyl benzène, benzène et alkyl cyclohexane) et les produits d'isomérisation (méthyl 1 ou 2 indane et perhydro-indane). Les résultats en sélectivité pour les catalyseurs non traités (exemple 1) et précarbonés (exemple 3) sont présentés dans le tableau suivant.

| Catalyseur | Température de sulfuration (°C) | C/(Co+Mo) Avant test tétraline | C/(Co+Mo) Après test tétraline | Sélectivité (%) Craquage & Isomérisation |
|---|---|---|---|---|
| Référence | 400°C | 0 | 1.46 | 10 % |
| Précarboné | 400°C | 1.72 | 1.72 | 4 % |
| Référence | 500°C | 0 | 1.62 | 10 % |
| Précarboné | 500°C | 1.58 | 1.58 | 4 % |

### Activité en hydrodésulfuration d'un gasoil sous 3 MPa d'hydrogène en phase liquide.

Les solides références précarbonés sont sulfurés dans l'unité de test d'HDS de gasoil comme décrit dans l'exemple 1. A l'issue de la phase de sulfuration, l'unité est pressurisée sous 3 MPa (30 Bar) d'hydrogène. Le gazole de test (point de coupe initial 229°C et final 383°C) de densité 0.850 contenant 1.32% poids de soufre est introduit à une vitesse volumique horaire (VVH) de 8 h⁻¹. Après remplissage de l'unité et stabilisation de la pression d'hydrogène, la température est augmentée jusqu' à 340°C.

Après 2 heures de stabilisation en conditions opératoires définissant le temps initial sous charge du catalyseur, des prélèvements dans les effluents liquides sont collectés sur une période de 18 heures pour analyser par fluorescence X leur teneur en soufre résiduel. L'activité (k) d'ordre 2.17 exprimée en 10⁻¹.g^{-1 17}.mmole^{-1 17}.h⁻¹ est ensuite calculée. L'activité relative (ou RWA [%]) est définie comme le rapport entre les activités " k " mesurées sur les catalyseurs référence, précarboné et l'activité initiale (ki) mesurée au temps initial sur le catalyseur référence. Les évolutions, au cours du temps, des activités k et RWA de chaque catalyseur sont présentées dans le tableau suivant :

| Temps en huile * (heure) | **+ 0 h** | | **+ 6 h** | | **+ 16 h** | |
|---|---|---|---|---|---|---|
| **Catalyseur** | **k** | **RWA** | **k** | **RWA** | **k** | **RWA** |
| Référence | 4.6 (kᵢ) | **100 %** | 4.2 | 91 % | 3.8 | **83 %** |
| Précarboné | 6.0 | **130 %** | 5.2 | 113 % | 5.1 | **111 %** |

### Conclusions

La précarbonation permet d'enregistrer un gain d'activité important par rapport à une sulfuration classique d'un oxyde sous H₂S-H₂ en phase gaz, le gain étant encore plus notable lorsque la sulfuration est réalisée à haute température.

La précarbonation permet de réduire la sélectivité en produits de craquage et d'isomérisation probablement en neutralisant les sites acides du support. Le taux de cokage sur les produits précarbonés est beaucoup plus faible que sur les oxydes non prétraités.

## Revendications

1. Procédé de présulfuration d'un catalyseur d'hydroconversion d'hydrocarbures en présence d'hydrogène et d'au moins un composé sulfuré, ledit catalyseur comprenant un support oxyde sur lequel est déposé au moins un élément des groupes VIII et VI, procédé mis en oeuvre ex-situ dans lequel le catalyseur est précarboné avant le traitement de présulfuration, la précarbonation comportant l'imprégnation à température ambiante avec un composé carboné liquide suivie d'un traitement thermique (ou pyrolyse) sous gaz inerte à une température comprise entre 300 et 650°C de manière à déposer dans les pores du catalyseur un composé carboné résiduel en majeure partie non lixiviable au toluène à reflux, la teneur en carbone résiduel étant de 2-10% pds par rapport à l'oxyde.

2. Procédé selon la revendication 1 dans lequel le traitement thermique est effectué à 300-500°C

3. Procédé selon l'une des revendications précédentes dans lequel l'étape de sulfuration est réalisée à pression atmosphérique dans un réacteur chauffé à 200-600°C en présence d'un mélange sulfo réducteur.

4. Procédé selon l'une des revendications précédentes dans lequel le composé liquide carboné d'imprégnation a un point d'ébullition supérieur à 200°C.

5. Procédé selon l'une des revendications précédentes dans lequel le composé liquide carboné d'imprégnation est choisi dans le groupe constitué par les hydrocarbures paraffiniques, naphténiques, ou aliphatiques, les composés organiques oxygénés.

6. Procédé selon l'une des revendications précédentes dans lequel le composé carboné d'imprégnation est une huile végétale.

7. Procédé selon l'une des revendications précédentes pour lequel le taux de lixiviation au toluène à reflux du composé carboné résiduel est inférieur à 40%.

## Patentansprüche

1. Verfahren zur Vorschwefelung eines Katalysators zur Hydrierumwandlung von Kohlenwasserstoffen in Gegenwart von Wasserstoff und wenigstens einer Schwefelverbindung, wobei der Katalysator einen Oxidträger umfasst, auf dem wenigstens ein Element der Gruppen VIII und VI abgeschieden ist, welches Verfahren ex situ ist, in welchem der Katalysator vor der Vorschwefelungsbehandlung derart vorcarbonisiert wird, wobei die Vorverkohlung die Imprägnierung bei Umgebungs Temperatur mit einer flüssigen kohlenstoffhaltigen Verbindung unfasst, gefolgt von einer thermischen Behandlung (oder Pyrolyse) unter Inertgas bei einer Temperatur zwischen 300 und 650°C derart, dass in den Katalysatorporen eine zum grösseren Teil nicht bei Toluolrückfluss herauslösbare kohlensstoffhaltige Restverbindung abgescheiden wird, wobei der Restkohlensstoff bei einem Gehalt zwischen 2 bis 10 Gew.% im Verhältnis zum Oxid ist.

2. Verfahren nach Anspruch 1, bei dem die thermische Behandlung bei 300 bis 500°C durchgeführt wird.

3. Verfahren nach einem der vorhergehenden Ansprüche, bei dem die Schwefelungsstufe bei Atmosphärendruck in einen auf 200 bis 600°C geheizten Reaktor in Gegenwart eines Schwefelreduktionsmittelgemischs durchgeführt wird.

4. Verfahren nach einem der vorhergehenden Ansprüche, bei dem die kohlenstoffhaltige flüssige Imprägnierungsverbindung einen Siedepunkt über 200°C hat.

5. Verfahren nach einem der vorhergehenden Ansprüche, bei dem die flüssige kohlenstoffhaltige Imprägnierungsverbindung gewählt wird aus der Gruppe, die besteht aus den paraffinischen, naphthenischen oder aliphatischen Kohlenwasserstoffen, den organischen sauerstoffhaltigen Verbindungen.

6. Verfahren nach einem der vorhergehenden Ansprüche, bei dem die kohlenstoffhaltige Imprägnierungsverbindung ein Pflanzenöl ist.

7. Verfahren nach einem der vorhergehenden Ansprüche, für das der Herauslösungsgrad mit Toluolrückfluss der kohlenstoffhaltigen Restverbindung kleiner als 40% ist.

## Claims

1. A process for pre-sulphurising a hydrocarbon hydroconversion catalyst in the presence of hydrogen and at least one sulphurised compound said catalyst comprising oxide support on which at least one element from groups VIII and VI is deposited, process carried out ex situ wherein the catalyst is pre-carbonised before the pre-sulphurisation treatment, pre-carbonisation comprising the impregnation at ambiant temperature with a liquid carbon-containing compound followed by a heat treatment step (or pyrolysis) in an inert gas at a temperature in the range 300°C to 650°C, such as to deposit in the pores of the catalyst a residual carbon containing compound the major portion of which is not leachable in refluxed toluene, the amount of residual carbon being in the range 2 to 10% by weight with respect to the oxide.

2. A process according to claim 1 wherein the thermal treatment is carried out at 300-500°C.

3. A process according to one of preceding claims wherein the sulphurisation step is carried out at atmospheric pressure in a reactor heated to between 200 and 600°C in the presencee of a sulpho-reducing gas mixture.

4. A process according to any one of de preceding claims wherein the carbon containing compound for impregnation has a boiling point over 200°C.

5. A process according to one of preceding claims wherein the liquid carbon containing compound for impregnation is selected in the group constituted by paraffinic, naphtenic and/or aliphatic hydrocarbons, organic oxygen containing compounds.

6. A process according to one of preceding claims wherein the carbon containing compound for impregnation is a vegetable oil.

7. A process according to one of preceding claims for which the degree of leaching in refluxed toluene of the residual carbon containing compound is less than 40%.
